# EUROPEAN PATENT APPLICATION

(11) **EP 0 556 733 A1**
(43) Date of publication of application: **25.08.1993**
(21) Application number: 93102194.3
(22) Date of filing: 12.02.1993
(51) Int. Cl.: B62D 25/18

(54) **Mudguard flap for motor vehicles**

(30) Priority: 19.02.1992 IT GE920015
(71) Applicant: METALPLAST S.p.A., I-40037 Sasso Marconi (Bologna) (IT)
(72) Inventor: Lamberti, Giuseppe, I-40033 Casalecchio di Reno, Bologna (IT); Mazzoli, Oliviero, I-40134 Bologna (IT)
(74) Representative: Porsia, Dino, Dr.

(57) **Abstract**

A mudguard flap for motor vehicles comprises two superposed panels (1-2), suitably spaced so as to form an inner interspace (10) and joined together perimetrically in a tight manner, with the exception of the lower side, so that the said interspace is open downwardly. The front panel (1) directed towards the wheel (Z) is provided on its outer face with projecting elements (3) shaped as pins, which are slightly equispaced between one another and aligned, so as to form drainage channels (4-5). The said front panel (1) presents, in the space of said channels, through holes (6) suitably distributed on the said panel and communicating with the said interspace (10) so that one part of the water and mud jets, thrown by the wheels is collected and discharged in downward direction by the said drainage channels (4-5) of the front panel, while another part of the said jets passes through the said holes (6) and enters into the interspace which freely discharges in downward direction.

## Description

The present invention relates to a mudguard flap for motor vehicles.

Document GB-A-2 224 251 discloses a mudguard flap made of a panel of thermoformed elastomeric material, provided with a perimetrical projecting border on at least one face directed towards the wheel of the motor vehicle, the lower edge of said face being deprived of any border or provided with a discontinuous border. The said face of the panel is provided integrally with small projecting elements, having the shape of points or pins, with their outer surface rounded, which are slightly equispaced between one another and arranged according to vertical rows slightly equispaced between one another so as to create vertical and transverse drainage channels, substantially along the whole width of the panel. The said pins are preferably characterized by a vertical substantially flat contour, so that their horizontal dimension is lesser than their vertical dimension.

Even if the operation of such mudguard flap resulted to be better than the operation of mudguard flaps of known type, for example of the type described in documents EP-A1-0 134 156, EP-A3-0 202 059, GB-A-1 101143, GB-A-2 084 094, GB-A-2 194 495 and US-A-4 398 739, however the effect of confinement of the nebulization did not result to be as desired, particularly when the motor vehicle was running along a very wet road.

The invention proposes an improved mudguard flap comprising:
1) a front panel, directed towards the wheel, with its face provided with projecting points or pins and also provided, between the said projecting pins, with through holes suitably distributed on the same panel;
2) a panel impermeable to water, secured rearwardly of the front panel, under perimetrical tight seal conditions, with the exception of the lower side, and which is suitably spaced apart from the said front panel, so that between the two panels there is obtained an interspace which is freely open in the downward direction.

The flow of water and wet mud thrown by the vehicle wheel against the thus conceived mudguard flap, partially flows between the projecting pins of the front panel and is discharged downwards, and partially passes through the holes of said panel and enters inside the inner interspace of the mudguard flap which also discharges downwards.

Mudguard flaps composed of two pieces are known, for example of the type described in document GB-A-2 208 160, which however are characterized by an operation which is completely different from the operation of the mudguard flap according to the present invention, inasmuch as they do not present the projecting points or pins on the panel directed towards the wheel, which according to the said prior art document has substantially a net-like (reticulate) shape, and inasmuch as the inner interspace is divided into a plurality of independent vertical sections, and at the interior of each section there are provided pointed projections which necessarily slow down the rate of flow of said sections. In the mudguard flap according to the present invention, the inner interspace is preferebly formed by a single chamber, having substantially the same width of the mudguard flap and which does not present barrages which stop or slow down the flow of water in the downward direction.

Further features of the invention, and the advantages deriving therefrom, will appear evident from the following description of a preferred embodiment of same, shown by way of non limiting example in the attached drawings, in which:
Figure 1 shows the mudguard flap diagrammatically and in elevation from the side directed towards the wheel of the motor vehicle;
Figure 2 is a diagrammatic plan view from the bottom of the mudguard flap;
Figures 3 and 4 show as many constructive details of the mudguard flap, respectively along section lines III-III and IV-IV of Figure 1;
Figures 5 and 6 are enlarged views, respectively in plan and side view, of one of the pointed projections or pins of the front panel of the mudguard flap;
Figure 7 shows in perspective view a detail of the rear portion of a motor vehicle, provided with the mudguard flap according to the invention.

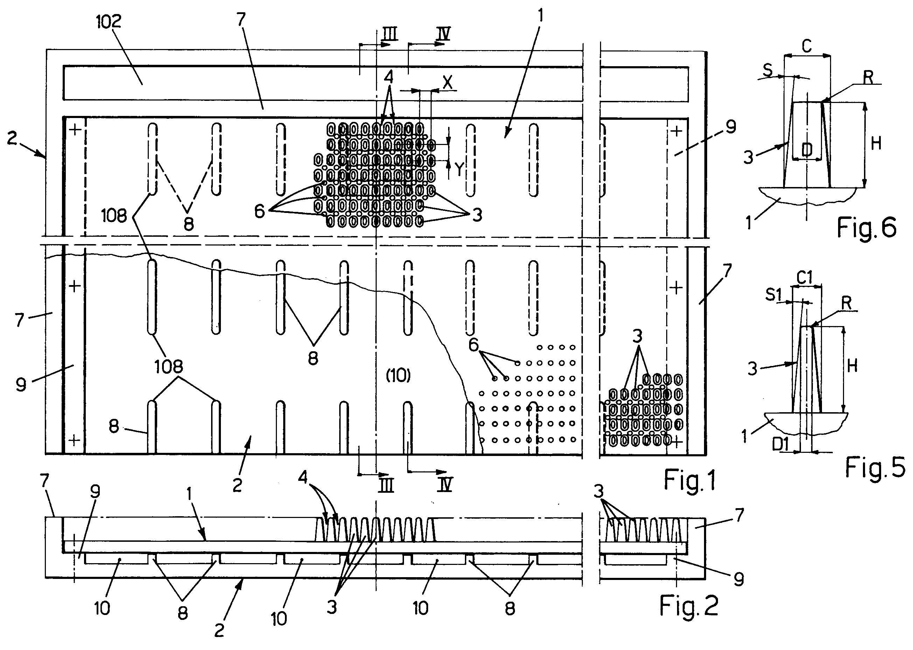

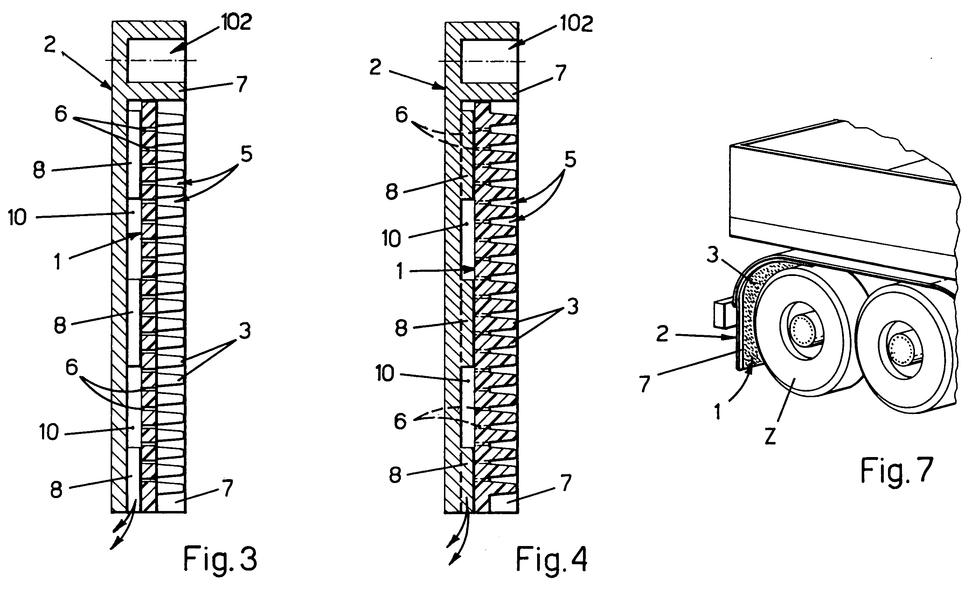

Referring to the Figures, it is noted that the mudguard flap is basically composed of two superposed panels 1 and 2 made of elastomeric, thermoformable material. Having regard to the direction of travel of the vehicle, panel 1 is called the front panel, while panel 2 is called the rear panel. The front panel 1, facing the wheel R of the motor vehicle (Figure 7), is provided on its face with with small integral projecting elements or pins 3, which are perpendicular to said face, slightly equispaced between one another and aligned on vertical rows slightly equispaced so as to create intercommunicating vertical drainage channels 4 and transversal drainage channels 5, substantially along the whole width of the panel 1 (Figure 1).

The pins 3 have a pyramidal shape, with a substantially rectangular base, with angles and edges suitably rounded, and are directed with the greater dimension of said base in the vertical direction.

Contrarily to what shown in the preferred embodiment of Figures 1-3-4, in which the pins 3 of one row are horizontally aligned with respect to the corresponding pins of the contiguous rows, so as to give origin to vertical drainage channels 4 and horizontal drainage channels 5, according to a modified embodiment, the said pins 3 can be arranged on staggered rows or in quincunx arrangement, so that the transverse drainage channels 5 are inclined in the downward direction.

In the tests which have been made, it has been ascertained that the best results of operation are obtained by adopting the following dimensions and arrangement of the pins 3:
C-C1 = 3.5 - 2.2 mm (base dimensions of pins 3);
D-D1 = 2.3 - 1 mm (apex dimensions of pins 3);
R = 0.5 mm (radius of the edges of pins 3);
S = S1 =5° (angle of inclination of the outer surfaces of the pins 3);
H = 7 mm (height of the pins 3);
X = 3.3 mm (distance between centers of two vertical contiguous rows of pins 3);
Y = 4.5 mm (distance between centers of two consecutive pins of each vertical row of pins 3).

From the Figures it can be noted that in the zones not occupied by the pins 3 and precisely in the middle of the drainage channels 4 and 5, the front panel 1 is provided with through holes 6 of suitable diameter. The distance between centers of the holes 6 of each row and of the holes of two contiguous rows, are equal to the above mentioned distance between centers X - Y.

The holes 6 can be distributed uniformly on the entire extension of the panel 1, or they can be arranged in a different manner, for example with greater concentration in the zone of the mudguard flap which is directly struck by the jets of water and wet mud thrown by the wheels of the motor vehicle. The holes 6 preferably have a round section, but may have any other appropriate form. In the same manner, the width of the holes 6, which indicatively has been selected in the order of 1.5 mm, can be modified if required. The holes 6 can have a width which is constant along their whole depth or can present modifications, for example diverging towards the rear face of panel 1.

The holes 6 can have equal or differentiated width, for example according to the concept of having the holes which present a greater diameter located in the area of the mudguard flap which is directly struck by the jets of water and wet mud thrown by the wheels of the motor vehicle.

From the Figures it is noted that the rear panel 2, which is also constructed of elastomeric thermoformable material, is provided, on its face directed towards the wheel of the motor vehicle, with a perimetrical raised border 7, which is continuous and presents a suitable height, and concerns all sides of the said panel with the exception of the lower side. On the same face of rear panel 2 there are integrally obtained spacing elements 8, presenting equal dimensions and which are suitably distributed onto the whole surface of the said panel. The upper and lower edges of said spacing elements 8 are preferably rounded, as indicated by reference numeral 108. The spacing elements 8 are for example aligned on vertical and transverse rows, located at suitable distance from one another.

It is however to be understood that the shape, size and arrangement of the spacing elements 8 can be broadly modified with respect to what has been illustrated in the drawings, without impairing the function of the said spacing elements, as below specified.

The rear panel 2 is finally provided close by the perimetrical border 7, or at least close by the two vertical portions of same and internally with respect thereto, with projecting portions 9 having the same height of the above mentioned spacing elements 8.

The front panel 1 is placed onto the rear panel 2 so as to bear against the projecting portion 9 and against the spacing elements 8, and in such a manner as to be surrounded perimetrically by the border 7 which preferably results to be coplanar to the tips of the pins 3 (Figures 2-3-4). The panels 1 and 2 are joined together in any suitable manner, for example by means of vulcanizing seals, adhesives, rivets, bolts and with the possible help of metallic frames and/or other means suitable for this purpose.

The panel 2 is provided on its perimeter, for example on its upper side, with one or more elements 102 suitably shaped and arranged for securing the flap to the mudguard of the vehicle, as shown by way of example in Figure 7.

It is to be understood that, contrarily to what has been described and illustrated, the spacing elements 8, the projectiong portions 9 and possibly also the surrounding border 7 can be integrally obtained with the panel 1. In this case, the mudguard flap could be formed only by the panel 1 if this latter can be applied onto a continuous supporting surface, which substitutes the rear panel 2, such as for example the continuous inner surface of the mudguard of the vehicle.

The confinement or boundary border 7 completes the outer drainage channels 4 and 5, so as to compel the water and mud to flow downwardly. For this purpose it is not to be excluded that the border 7 be suitably higher with respect to the pins 3 and that it be suitably shaped with its sides turned towards the said pins.

The presence of the spacing elements 8 and 9 between the panels 1 and 2 determines, between the said panels, an interspace 10 which is open downwardly which, in the tests which were effected, had for example a depth of 3 - 4 mm. It is however understood that these dimensions are merely indicative and that they can be broadly modified.

Contrarily to what has been illustrated in the drawings, the depth of the interspace can slightly increase in the downward direction.

The lower mouth of the interspace 10 can be truncated, i.e. arranged on a plane which is perpendicular to the outer surfaces of the mudguard flap, or it can be bevel-cut, with any suitable downward inclination and oriented forwardly or rearwardly with respect to the direction of movement of the vehicle.

The operation of the thus conceived mudguard flap is simple and evident.

The jets and splashes of water and wet mud which hit the panel 1, are partially collected and quickly discharged downwardly by the channels 4 and 5 formed by the pins 3 and by the perimetrical border 7, and partially they penetrate inside the interspace 10 through the holes 6, and from the said interspace they are quickly discharged downwardly. In this manner it is avoided an excessive accumulation of water and wet mud onto the panel 1, which would impair the operation of said panel and would give origin to undesired effects of nebulization.

The flow rate of the interspace 10 is not limited by the spacing elements 8 which are discontinuous and suitably spaced between one another, so that the central portions of the said interspace result to be connected with peripheral zones which contribute also in an active manner to the drainage of the liquid, even if this latter does not arrive directly from the holes 6 facing said zones.

## Claims

1. A mudguard flap for motor vehicles comprising two superposed panels (1-2), suitably spaced so as to form an inner interspace (10) and joined together perimetrically in a tight manner, with the exception of the lower side, so that the said interspace is open downwardly; the front panel (1) directed towards the wheel (Z) of the vehicle being provided on its outer face with projecting elements (3) shaped as pins, which are slightly equispaced between one another and aligned, so as to form drainage channels (4-5), the said front panel (1) presenting, in the space of said channels, through holes (6) suitably distributed on the said panel and communicating with the said interspace (10) so that one part of the water and wet mud jets thrown by the wheel is collected and discharged in downward direction by the said drainage channels (4-5) of the front panel, while another part of the said jets passes through the said holes (6) and enters into the interspace (10) which freely discharges in downward direction.

2. A mudguard flap according to claim 1, in which the front panel (1) is bounded by a raised border (7) with the exception of the bottom edge to provide an outlet for the drainage channels (4-5).

3. A mudguard flap according to any one of the preceding claims, in which the through holes (6) are uniformly distributed along the entire surface of the said panel.

4. A mudguard flap according to claims 1 and 2, in which the through holes (6) are distributed with particular concentration in the zone in which the mudguard flap is directly struck by the jets of water and wet mud thrown by the wheels of the motor vehicle.

5. A mudguard flap according to any one of the preceding claims, in which the through holes (6), can present differentiated diameter, for example by arranging the holes with greater diameter in the zone of the panel which is directly struck by the jets of water and wet mud thrown by the wheels of the motor vehicle.

6. A mudguard flap according to any one of the preceding claims, in which the through holes (6) present a diameter comprised between 1 and 3 mm, preferably in the order of 1.5 mm in the case in which they all present an equal diameter.

7. A mudguard flap according to any one of the preceding claims, in which the through holes (6) present a width which is progressively increasing in the direction of the interspace.

8. A mudguard flap according to any one of the preceding claims, in which spacing elements (8) are provided for ensuring the required reciprocal spacing between the panels (1-2), said spacing elements being obtained integrally on at least one of the opposed faces of the said panels, being suitably distributed along the entire surface of the panels and being suitably spaced between one another so that the interspace (10) between the panels does not present insulated zones.

9. A mudguard flap according to any one of the preceding claims, in which on the opposed faces of the panels, there are integrally obtained projecting portions (9) onto which there is realized the reciprocal fastening of the said panels, for example by means of vulcanizing seals, adhesives, rivets, bolts or other.

10. A mudguard flap according to claim 2, in which the raised border (7) which circumscribes perimetrically the said mudguard flap with the exception of the bottom edge, is obtained integrally together with any one of the panels (1-2) of which the mudguard flap is composed.

11. A mudguard flap according to any one of the preceding claims, characterized by the fact that the rear panel (2) consists of a continuous impermeable surface forming part of the vehicle body, such as for example the side of the mudguard facing the wheel, and the front panel (1) is provided integrally with the spacing elements (8), with the projecting portions (9) and with the raised border (7).

12. A mudguard flap according to any one of the preceding claims, in which the interspace (10) existing between the two panels (1-2) presents a depth increasing in the downward direction.

13. A mudguard flap according to any one of the preceding claims, in which the lower discharge mouth of the interspace (10) existing between the two panels (1-2) is truncated, i.e. arranged on an ideal plane perpendicular to the terminal lower portion of the outer surfaces of the mudguard flap.

14. A mudguard flap according to claims 1 to 12, in which the lower discharge opening of the interspace (10) existing between the two panels (1-2) is bevel-shaped.

15. A mudguard flap according to any one of the preceding claims, in which at least the front panel is made of thermoformed elastomeric material.
